# EUROPÄISCHE PATENTANMELDUNG

(11) **EP 1 193 096 A1**
(43) Veröffentlichungstag der Anmeldung: **03.04.2002**
(21) Anmeldenummer: 00121173.9
(22) Anmeldetag: 29.09.2000
(51) Int. Cl.: B60J 10/00, B60J 10/06

(54) **Dichteinrichtung zur Abdichtung von Bereichen zweier Bauteile**

(71) Anmelder: ContiTech Profile GmbH, 30165 Hannover (DE)
(72) Erfinder: Bederna, Christoph Dr., 31515 Steinhude (DE); Wiegels, Torsten, 31693 Hespe (DE)
(74) Vertreter: Schneider, Egon

(57) **Zusammenfassung**

Dichteinrichtung zur Abdichtung von Bereichen zweier Bauteile, von denen ein Bauteil die Dichteinrichtung trägt, die in Dichtposition an dem weiteren Bauteil anliegt, mit einem Befestigungselement und einem Dichtkörper, **dadurch gekennzeichnet, dass** der Dichtkörper (3, 4) ein Dichtelement (3) aufweist und dass zwischen dem Befestigungselement (2) und dem Dichtelement (3) ein Übergangsbereich (4) vorgesehen ist, der einen Drehpunkt zur Auslenkung des Dichtelementes (3) darstellt, so dass das Dichtelement (3) bei Annäherung der Bauteile (1, 5) ausgelenkt und in Schließposition durch eine, in ihrer Hauptwirkungsrichtung von der Schließkraft-Richtung abweichende, Kraft gestaucht bzw. gebogen wird, die von dem weiteren Bauteil (5) oder einem mit diesem verbundenen Formstück ausgeht.

## Beschreibung

Die Erfindung betrifft eine Dichteinrichtung zur Abdichtung von Bereichen zweier Bauteile, von denen ein Bauteil die Dichteinrichtung trägt, die in Dichtposition an dem weiteren Bauteil anliegt, gemäß dem Oberbegriff des Patentanspruchs 1.

Dichteinrichtungen zur Abdichtung von Bereichen zweier Bauteile, zwischen denen bei ausreichender Annäherung durch eine Dichteinrichtung eine Dichtwirkung erzielt wird, sind in verschiedensten Ausführungen bekannt. Um eine zuverlässige Abdichtung zu erzielen, wird die Dichteinrichtung bei fortschreitender Annäherung der Bauteile mit einer Kraft beaufschlagt, deren Größe von der gewünschten Dichtwirkung abhängig ist.

In dem Dokument EP 0 783 988 B1 wird ein Dichtungsstreifen zur Abdichtung einer Türöffnung beschrieben, der im Wesentlichen aus einem Bodenbereich und einer Dichtungswand besteht, deren innere und äußere Seite zueinander beabstandet mit dem Bodenbereich verbunden sind und einen schlauchförmigen Dichtungsbereich bilden.

Mit einer solchen Dichtung kann eine zuverlässige Abdichtung dann gewährleistet werden, wenn die Türfensterscheibe, zu der die Abdichtung erfolgen soll, mit ausreichend hoher Kraft gegen die Dichtungswand gedrückt wird.

Der Erfindung liegt die Aufgabe zugrunde, eine Dichteinrichtung derart auszubilden, dass für die zuverlässige Abdichtung von Bauteilen zueinander nur eine vergleichsweise geringe Kraft aufgebracht werden muss.

Erfindungsgemäß wird die Aufgabe dadurch gelöst, dass der Dichtkörper ein Dichtelement aufweist und dass zwischen dem Befestigungselement und dem Dichtelement ein Übergangsbereich vorgesehen ist, der einen Drehpunkt zur Auslenkung des Dichtelementes darstellt, so dass das Dichtelement bei Annäherung der Bauteile ausgelenkt und in Schließposition durch eine, in ihrer Hauptwirkungsrichtung von der Schließkraft-Richtung abweichende, Kraft gestaucht bzw. gebogen wird, die von dem weiteren Bauteil oder einem mit diesem verbundenen Formstück ausgeht.

Die Erfindung ist mit dem Vorteil verbunden, dass in Folge der unterschiedlichen Wirkrichtungen von Schließ- und Dichtkraft eine nur geringe Schließkraft zu einer hohen Dichtkraft und damit zuverlässigen Abdichtung des Zwischenraumes zweier Bauteile führt.

In bevorzugter Ausgestaltung der Erfindung ist der Übergangsbereich durch eine Einschnürung zwischen dem Dichtelement und dem Befestigungselement gebildet, wodurch eine weitere Verringerung der Schließkraft bei annähernd gleicher Dichtkraft erreicht wird.

Weiterhin besteht die Möglichkeit, den Übergangsbereich aus einem Material zu bilden, das eine Auslenkung des Dichtelementes relativ zum Befestigungselement mit geringer Kraft ermöglicht.

Das Dichtelement kann verschiedene geometrische Formen annehmen, die mit der Maßgabe festgelegt werden, dass in Dichtposition des Dichtelementes eine ausreichend hohe Reaktionskraft auf die von den Bauteilen ausgehende Kraft erzeugt wird. So können die Dichtelemente als Hohlkörper ausgebildet sein, so dass über unterschiedliche Wandbereiche sowohl die gewünschte Biegesteifigkeit bei Lageänderung des Hohlkörpers in Folge Einwirkung der Bauteile als auch die Kompressionssteifigkeit des Bereiches des Hohlkörpers eingestellt werden kann, der in Dichtposition der Bauteile die Dichtwirkung übernimmt.

Für eine Realisierung einer wirtschaftlichen Fertigung der Dichteinrichtung kann das Dichtelement auch als Steg ausgebildet sein, der dann von einem Hohlkörper umschlossen ist, wenn auch optische Aspekte Berücksichtigung finden sollen. Auch bietet sich der Einsatz einer solchen Lösung an verschmutzungsgefährdeten Orten an, da der Übergangsbereich vom Befestigungselement zum Dichtelement in Folge der Bildung von geschlossenen Kammern hermetisch abgeschirmt ist.

In weiterer bevorzugter Ausführung der Erfindung ist der Steg des Dichtelementes Teil der Wandung des Hohlkörpers, so dass eine extreme Verlagerung des Drehpunktes des Steges in den Profilaußenbereich erreicht werden kann.

Das Dichtelement besteht vorzugsweise durchgängig aus einem Material, wobei Gummi, Moosgummi oder thermoplastische Elastomere zum Einsatz kommen. Zur Einstellung einer speziellen Dichtkraft-Kennlinie wird dagegen das Dichtelement in Längsrichtung eine Materialabfolge verschiedener Materialien aufweisen.

Auch kann es für spezielle Anwendungen sinnvoll sein, dass das Dichtelement aus mehreren Hohlkörpern besteht, von denen jeweils Teilbereiche der Wandung die Dichtkraft in Dichtposition aufnehmen.

Die Auslenkung des Dichtelementes bei Annäherung von dem die Dichteinrichtung tragenden Bauteil und dem weiteren Bauteil kann zweckmäßig auch durch Reibschluss erfolgen, so dass an die Kontur des weiteren Bauteils keine speziellen Forderungen zu stellen sind.

Weiterhin ist in zweckmäßiger Ausführung der Erfindung am Dichtelement ein Deformationsbereich vorgesehen, in den bei Annäherung von dem die Dichteinrichtung tragenden Bauteil und dem weiteren Bauteil Letzteres eingreift, wodurch das Dichtelement ausgelenkt wird. Durch eine solche Maßnahme wird das Dichtelement relativ zu dem angreifenden Bauteil fixiert und eine definierte Auslenkung in die Dichtposition des Dichtelementes ermöglicht.

Die Erfindung soll nachfolgend anhand eines Ausführungsbeispieles näher erläutert werden.

Es zeigen
- Fig. 1: eine Anordnung zweier Bauteile mit nicht unter Krafteinwirkung stehender Dichteinrichtung,
- Fig. 2: eine Darstellung gemäß Figur 1, jedoch mit in Dichtposition befindlichem Dichtkörper,
- Fig. 3: einen mit einer Einschnürung versehenen Dichtkörper,
- Fig. 4: ein als Hohlkörper ausgebildetes Dichtelement,
- Fig. 5: einen Dichtkörper mit einem als Hohlkörper ausgebildeten, einen Steg enthaltenden Dichtelement und
- Fig. 6: einen Dichtkörper, dessen Wandung in einem Teilbereich das Dichtelement bildet.

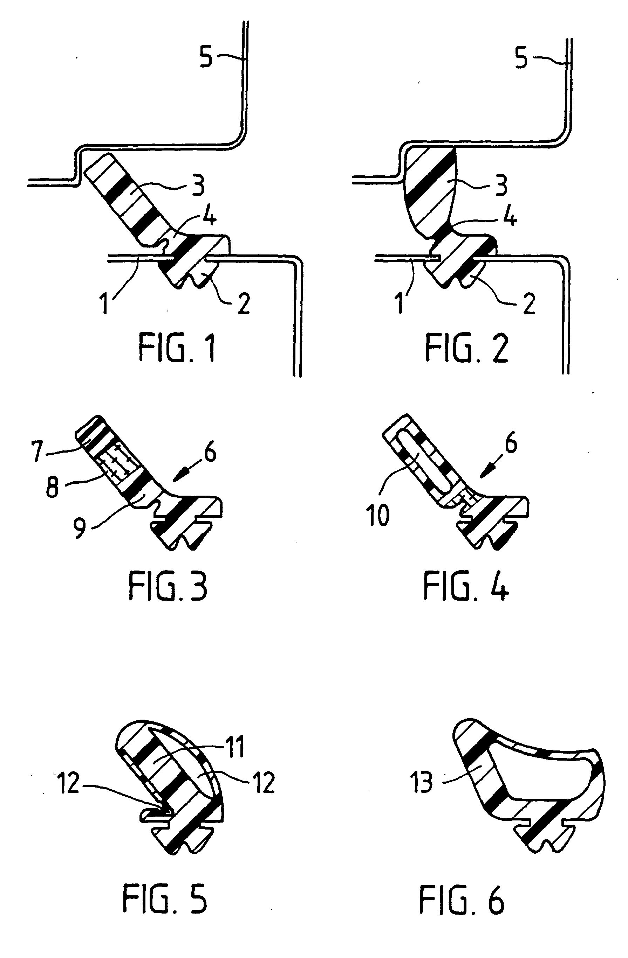

In Figur 1 ist ein Karosseriebauteil 1 dargestellt, in das eine Dichteinrichtung eingefügt ist, die aus einem Befestigungselement 2 und einem Dichtelement 3 besteht, zwischen denen sich eine Einschnürung 4 befindet, die bei Bewegung eines als Kraftfahrzeugtür 5 ausgebildeten Bauteils eine Auslenkung des Dichtelementes 3 ermöglicht.

Die Auslenkung des Dichtelementes 3 erfolgt bis zu einem in Figur 2 dargestellten Zustand, in dem in Längsrichtung des Dichtelementes 3 eine Kompressionskraft auf das Dichtelement 3 wirkt, die zu einer funktionssicheren Abdichtung zwischen dem Karosseriebauteil 1 und der Kraftfahrzeugtür 5 führt. Die hierbei in Längsrichtung des Dichtelementes 3 aufgebrachte Kompressionskraft ist größer als die im Wesentlichen senkrecht zur Kompressionskraft wirkende Auslenkkraft. Damit wird sichergestellt, dass mit einer nur geringen, beim Schließen der Kraftfahrzeugtür 5 aufzubringenden, Kraft eine besonders gute Dichtwirkung erzielt wird.

Die Einschnürung 4 ist dabei derart ausgebildet, dass eine Auslenkung des Dichtelementes 3 mit nur geringer Kraft erfolgen kann, jedoch die Abstützung des Dichtelementes 3 in dem zwischen Dichtelement 3 und Befestigungselement 2 gebildeten Übergangsbereich 6 (Figur 3), der die Einschnürung 4 enthält, in Dichtposition der Dichteinrichtung ausreichend hoch ist, so dass in Dichtposition eine ausreichend große Kompressionskraft übertragen werden kann, deren Wirkung zu einer Abdichtung führt, wie sie beispielsweise auf dem Automobilsektor den ständig höheren Forderungen entspricht.

Das Dichtelement 3 kann, wie aus Figur 3 ersichtlich, in Längsrichtung aus einer Abfolge von unterschiedlichen Materialbereichen 7, 8 und 9 gebildet sein. Hierbei können beispielsweise Gummi, Moosgummi und thermoplastische Elastomere zum Einsatz kommen. Die Auswahl der verschiedenen Materialien wird durch die geforderte Dichtkraft-Kennlinie bestimmt.

Das Dichtelement 3 kann gemäß der Darstellung in Figur 4 mit einem Hohlraum 10 versehen sein. Auch besteht die Möglichkeit, den Übergangsbereich 6 zwischen Befestigungselement 2 und Dichtelement 3 aus einem Material herzustellen, das sich von dem für das Befestigungselement 2 und/oder das Dichtelement 3 gewählten Material unterscheidet.

Durch gezielte Dimensionierung des Hohlraumes 10 innerhalb des Dichtelementes 3 und eine geeignete Materialauswahl für den Übergangsbereich 6 zwischen Befestigungselement 2 und Dichtelement 3 kann das Auslenk- und/oder Dichtverhalten der Dichteinrichtung auf den konkreten Einsatzzweck abgestimmt werden.

Des Weiteren kann das Dichtelement 3 aus einem Steg 11 gebildet sein, der von einem Hohlprofil umschlossen ist, so dass zwei in sich geschlossene Kammern 12 entstehen (Figur 5). Eine solche Ausbildung des Dichtkörpers ist mit dem Vorteil verbunden, dass sich am Übergangsbereich 6 keine Fremdstoffe anlagern können, so dass ein definiertes Auslenkverhalten des Dichtelementes 3 bei einer solchen Ausführungsform stets vorliegt.

Gemäß einer weiteren in Figur 6 dargestellten Ausführungsform ist das Dichtelement 3 Bestandteil der Wandung eines Hohlkörpers, dessen Wandungsabschnitt 13 entsprechend ausgebildet und dimensioniert ist.

Die dargestellten Ausführungsvarianten beziehen sich auf ein profiliertes Bauteil wie beispielsweise eine Kraftfahrzeugtür 5, über deren Profilierung die Auslenkung des Dichtkörper erfolgt. Natürlich liegt es auch im Rahmen der Erfindung, auf den Dichtkörper durch Reibschluss derart einzuwirken, dass eine Auslenkung des Dichtelementes 3 ermöglicht wird.

Für ein sicheres Auslenken des Dichtelementes 3 besteht nach der Erfindung auch die Möglichkeit, am Dichtkörper einen Deformationsbereich vorzusehen, um auf der Grundlage eines durch die Deformation entstehenden Formschlusses zum betreffenden Bauteil das Dichtelement 3 in seiner Positionierung zu verändern.

## Patentansprüche

1. Dichteinrichtung zur Abdichtung von Bereichen zweier Bauteile, von denen ein Bauteil die Dichteinrichtung trägt, die in Dichtposition an dem weiteren Bauteil anliegt, mit einem Befestigungselement und einem Dichtkörper, **dadurch gekennzeichnet, dass** der Dichtkörper (3, 4) ein Dichtelement (3) aufweist und dass zwischen dem Befestigungselement (2) und dem Dichtelement (3) ein Übergangsbereich (4) vorgesehen ist, der einen Drehpunkt zur Auslenkung des Dichtelementes (3) darstellt, so dass das Dichtelement (3) bei Annäherung der Bauteile (1, 5) ausgelenkt und in Schließposition durch eine, in ihrer Hauptwirkungsrichtung von der Schließkraft-Richtung abweichende, Kraft gestaucht bzw. gebogen wird, die von dem weiteren Bauteil (5) oder einem mit diesem verbundenen Formstück ausgeht.

2. Dichteinrichtung nach Anspruch 1, **dadurch gekennzeichnet, dass** der Übergangsbereich (6) durch eine Einschnürung (4) zwischen dem Dichtelement (3) und dem Befestigungselement (2) gebildet ist.

3. Dichteinrichtung nach Anspruch 1, **dadurch gekennzeichnet, dass** der Übergangsbereich (6) aus einem Material gebildet ist, das eine Auslenkung des Dichtelementes (3) relativ zum Befestigungselement (2) mit geringer Kraft ermöglicht.

4. Dichteinrichtung nach Anspruch 1, **dadurch gekennzeichnet, dass** das Dichtelement (3) als Hohlkörper ausgebildet ist.

5. Dichteinrichtung nach Anspruch 1, **dadurch gekennzeichnet, dass** das Dichtelement (3) als Steg (11) ausgebildet ist.

6. Dichteinrichtung nach Anspruch 5, **dadurch gekennzeichnet, dass** der Steg (11) des Dichtelementes (3) von einem Hohlkörper umschlossen ist.

7. Dichteinrichtung nach Anspruch 5, **dadurch gekennzeichnet, dass** der Steg (11) des Dichtelementes (3) Teil der Wandung (13) des Hohlkörpers ist.

8. Dichteinrichtung nach Anspruch 2 oder 3, **dadurch gekennzeichnet, dass** das Dichtelement (3) durchgängig aus nur einem Material besteht.

9. Dichteinrichtung nach Anspruch 8, **dadurch gekennzeichnet, dass** Gummi, Moosgummi oder thermoplastische Elastomere zum Einsatz kommen.

10. Dichteinrichtung nach Anspruch 2 oder 3, **dadurch gekennzeichnet, dass** das Dichtelement aus einer Materialabfolge in Längsrichtung desselben besteht.

11. Dichteinrichtung nach Anspruch 1, **dadurch gekennzeichnet, dass** der Dichtkörper (3, 4) eine Anzahl von Hohlkörpern aufweist, deren Wandung zumindest in Teilbereichen das Dichtelement (3) bildet.

12. Dichteinrichtung nach Anspruch 1, **dadurch gekennzeichnet, dass** bei Annäherung von dem die Dichteinrichtung tragenden Bauteil (1) und dem weiteren Bauteil (5) die Auslenkung des Dichtelementes (3) durch Reibschluss erfolgt.

13. Dichteinrichtung nach Anspruch 1, **dadurch gekennzeichnet, dass** am Dichtelement (3) ein Deformationsbereich vorgesehen ist, in den bei Annäherung von dem die Dichteinrichtung tragenden Bauteil (1) und dem weiteren Bauteil (5) das weitere Bauteil (5) eingreift, wodurch das Dichtelement (3) ausgelenkt wird.
